# EUROPEAN PATENT SPECIFICATION

(11) **EP 4 545 366 B1**
(45) Date of publication and mention of the grant of the patent: **09.12.2026**
(21) Application number: 24205374.2
(22) Date of filing: 08.10.2024
(51) Int. Cl.: B60S 1/38

(54) **WIPER BLADE WITH MULTI-SEGMENT DECORATIVE COVER STRUCTURE**
WISCHBLATT MIT MEHRTEILIGER DEKORATIVER ABDECKSTRUKTUR
BALAI D'ESSUIE-GLACE AVEC STRUCTURE DE COUVERCLE DÉCORATIF À SEGMENTS MULTIPLES

(30) Priority: 27.10.2023 CN 202311416008
(43) Date of publication of application: 30.04.2025
(73) Proprietor: Danyang UPC Auto Parts Co., Ltd., 212300 Danyang, Zhenjiang, Jiangsu (CN)
(72) Inventor: CHANG, Che-Wei, 22069 New Taipei City (TW); YANG, Cheng-Kai, 22069 New Taipei City (TW); CHANG, Chuan-Chih, 22069 New Taipei City (TW)
(74) Representative: 2K Patent Partnerschaft mbB

(56) References cited:
- WO-A1-2013/080694
- WO-A2-2011/139014
- WO-A2-2011/142538
- US-A1- 2015 096 141
- US-B2- 10 723 322

## Description

### BACKGROUND

### Technical Field

The disclosure relates to a wiper blade, particularly to a wiper blade with a multi-segment decorative cover structure.

### Related Art

Regarding wipers used on a vehicle glass, a related-art wiper includes a squeegee and a plurality of frames connected to each other and movable relative to each other. The squeegee is connected to parts of the frames and disposed across them. Most of the frames of a related-art wiper are uncovered and this leads to an issue of appearance.

A related-art wiper is equipped with a decorative cover for overcoming the aforementioned issue. Most of the aforementioned frames are covered by the same decorative cover, so that the decorative cover covers most of the frames to beautify the related-art wiper.

US 10 723 322 B2 discloses a wiper blade according to the preamble of appended claim 1. A further relevant wiper blade is disclosed in WO 2013/080694 A1.

However, the related-art wiper has the decorative cover additionally and therefore leads to hinders to the movements of most frames, as will be described in detail later. The vehicle glass has a curved surface, and the frames will move on the vehicle glass correspondingly to the curved surface thereof when wiping., However, this original corresponding movement is hindered and restricted by the decorative cover formed as one piece, so that the movements originally performed by the frames may be invalid and it is difficult to wipe the water droplets from the vehicle glass. This has been criticized for a long time.

In view of this, the inventors have devoted themselves to the above-mentioned prior art, researched intensively and cooperated with the application of science to try to solve the above-mentioned problems. Finally, the invention which is reasonable and effective to overcome the above drawbacks is provided.

### SUMMARY

An object of the disclosure is to provide a wiper blade with a multi-segment decorative cover structure, the decorative cover structure is divided into multiple segments without any connection therebetween so that a squeegee is prevented from being obstructed or limited by the decorative cover structure when wiping on vehicle glass.

To accomplish the above object, the disclosure provides a wiper blade according to appended claim 1. Advantageous embodiments are the subject of the dependent claims.

In comparison with the related art, the disclosure includes the following functions. The decorative cover structure is segmented to multiple sections (including the main cover, the auxiliary covers and sub-covers) without any connection therebetween, so as to prevent from being obstructed and restricted by the decorative cover structure when the squeegee is wiping on the vehicle glass.

### BRIEF DESCRIPTION OF THE DRAWINGS

FIG. 1 is a perspective view of the first embodiment of the wiper blade of the disclosure;
FIG. 2 is an exploded view of the first embodiment of the wiper blade of the disclosure before assembling the decorative cover structure;
FIG. 3 is an exploded view of the decorative cover structure and the frame structure of the first embodiment of the wiper blade of the disclosure;
FIG. 4 is a bottom schematic view of the decorative cover structure and the frame structure of the first embodiment of the wiper blade of the disclosure after being combined;
FIG. 5 is a cross-sectional view of the wiper blade of the disclosure along line 5-5 in FIG. 4;
FIG. 6 is a partially enlarged view of a part of the wiper blade of the disclosure in FIG. 5;
FIG. 7 is a partially enlarged view of another part of the wiper blade of the disclosure along line 5-5 in FIG. 4;
FIG. 8 is a cross-sectional view of the wiper blade of the disclosure along line 8-8 in FIG. 4;
FIG. 9 is a cross-sectional view of the wiper blade of the disclosure along line 9-9 in FIG. 4;
FIG. 10 is a cross-sectional view of the wiper blade of the disclosure along line 10-10 in FIG. 4;
FIG. 11 is a cross-sectional view of the second embodiment of the wiper blade of the disclosure; and
FIG. 12 is a cross-sectional view of the third embodiment of the wiper blade of the disclosure.

### DETAILED DESCRIPTION

The technical contents of this disclosure will become apparent with the detailed description of embodiments accompanied with the illustration of related drawings as follows. It is intended that the embodiments and drawings disclosed herein are to be considered illustrative rather than restrictive.

The disclosure provides a wiper blade with a multi-segment decorative cover structure.

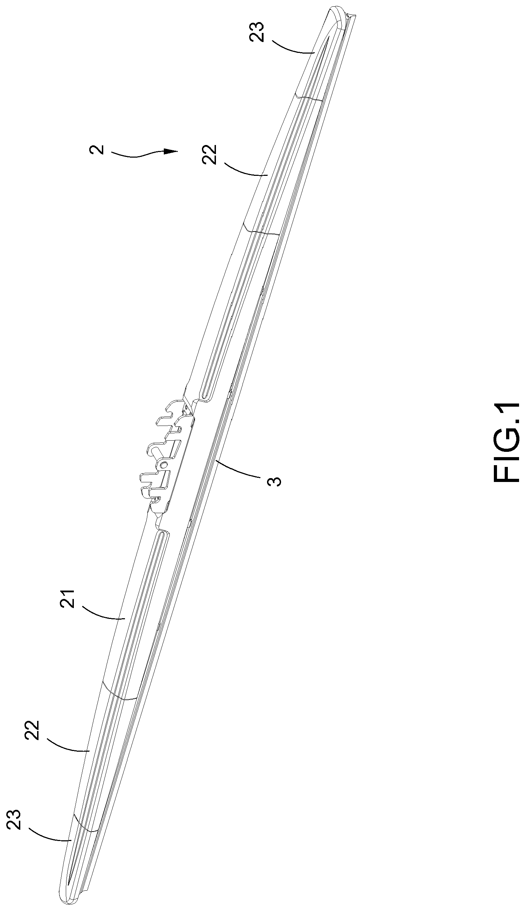

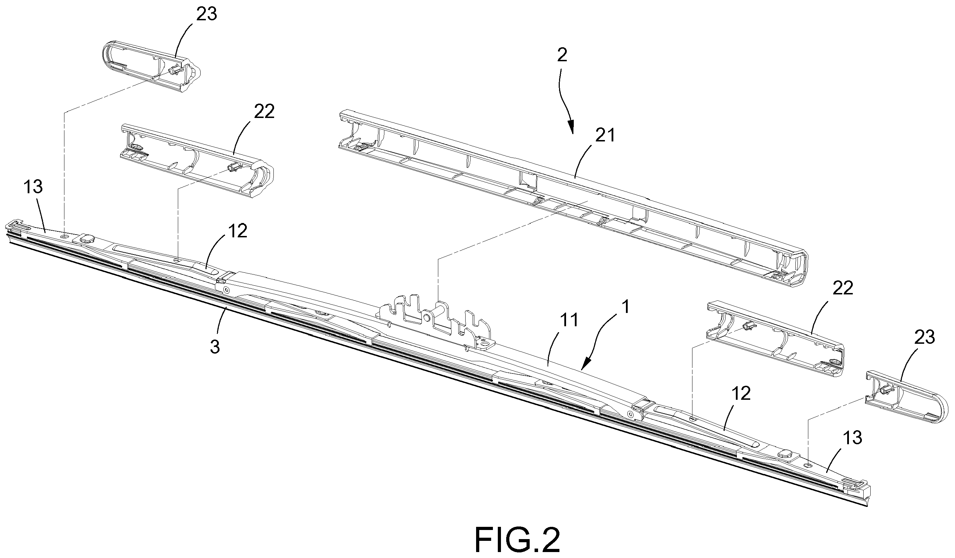

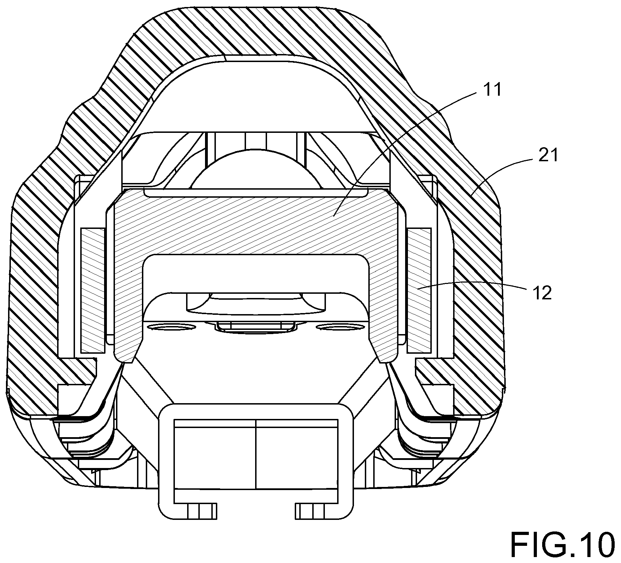

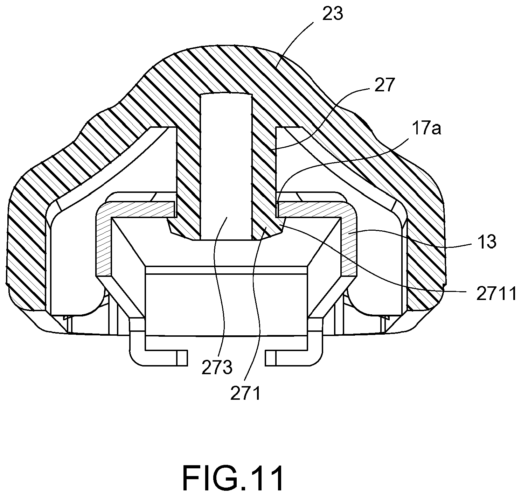

FIGS. 1-10 show the first embodiment. FIGS. 11-12 show the second and third embodiments, respectively.

As shown in FIGS. 1-10, the first embodiment of the wiper blade with a multi-segment decorative cover structure (hereinafter "wiper") of the disclosure includes a frame structure 1, a squeegee 3 and a decorative cover structure 2. In detail, multiple connecting members 4 are included.

The frame structure 1 includes a main frame 11, at least two auxiliary frames 12 and multiple sub-frames 13. In this embodiment, the auxiliary frames 12 may be two in number, and the sub-frame 13 is four in number, which is two times thereof. In other embodiments of a larger wiper which is not shown in the figures, the amounts of the auxiliary frames 12 and the sub-frames 13 may be increased correspondingly. It is noted that each of the main frame 11, the auxiliary frames 12 and the sub-frames 13 can be divided into a left segment, a right segment and a middle segment connected between the left segment and the right segment (all not labeled).

A middle of each auxiliary frame 12 is respectively connected two ends of the main frame 11 and rotatable. In detail, a bolt P is inserted between the main frame 11 and the auxiliary frame 12 to make the auxiliary frame 12 movable relative to the main frame 11 about the bolt P as a shaft as a seesaw.

A middle of each sub-frame 13 is respectively loosely connected to two ends of each auxiliary frame 12. The squeegee 3 is connected to the sub-frames 13 respectively and disposed across the sub-frames 13. The middle of each auxiliary frame 12 is formed with an inserting hole 17. The inserting hole 17 and the insertion point of the bolt P is staggered. Among the sub-frames 13, a middle of the sub-frame 13 connected to two opposite outer ends between the two auxiliary frames 12 is formed with an inserting hole 17a. The inserting hole 17a and the elongated hole 16a are staggered.

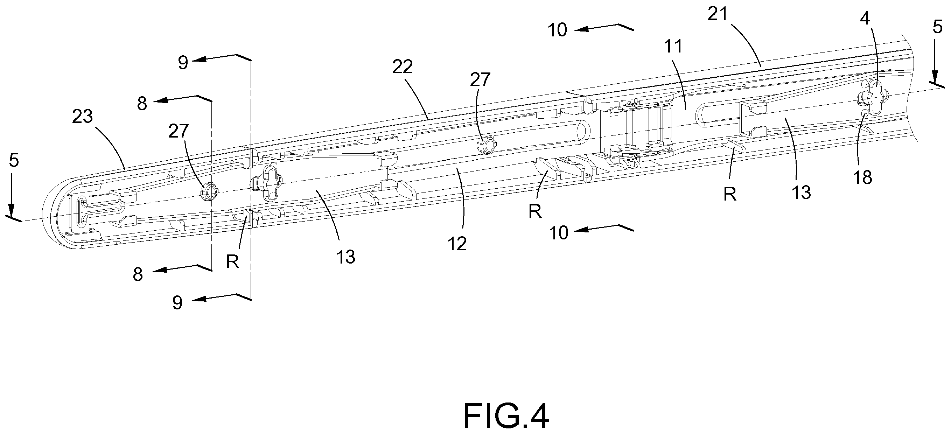

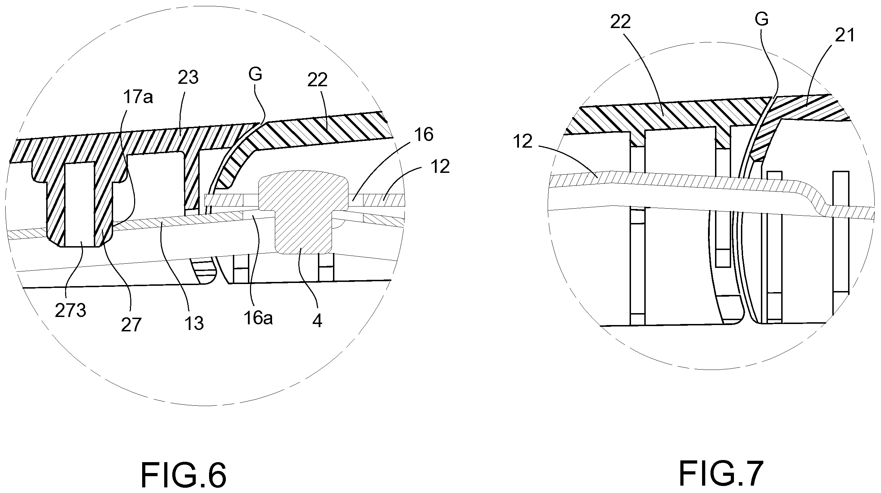

The aforementioned loose connection may be any various available connection. Specifically, the connecting member 4 is connected between the auxiliary frame 12 and the sub-frame 13 to make the sub-frame 13 movable relative to the auxiliary frame 12 about the connecting member 4 as a shaft. In detail, each of two ends of the each auxiliary frame 12 is formed with an elongated hole (capsule-shaped hole). The middle of each sub-frame 13 is also formed with an elongated hole 16a. The connecting member 4 is inserted into the elongated hole 16 of the auxiliary frame 12 and the elongated hole 16a of the sub-frame 13. The connecting member 4 will be movably clamped between the auxiliary frame 12 and the sub-frame 13 after it is rotated to an angle (such as 90 degrees) by a user. As shown in FIGS. 4 and 6, the connecting member 4 which has been inserted and rotated to intercross with the elongated hole 16a.

The decorative cover structure 2 includes a main cover 21, at least two auxiliary covers 21 and at least two sub-covers 23. The main cover 21 covers the main frame 11. Each auxiliary cover 22 covers each auxiliary frame 12. The sub-covers 23 cover the sub-frames 13 respectively. Each auxiliary cover 22 has an inserting bar 27 protruded therefrom. The inserting bars 27 are, respectively, tightly inserted into the inserting holes 17 corresponding thereto on the auxiliary frames 12. Each sub-cover 23 has an inserting bar 27 protruded therefrom. The inserting bars 27 are, respectively, tightly inserted into the inserting holes 17a corresponding thereto on the sub-frames 13. Thereby, the decorative covers (means the main cover 21, the auxiliary covers 22 and the sub-covers 23, hereinafter the same) can be respectively fixed to the frames (means the main frame 11, the auxiliary frames 12 and the sub-frames 13, hereinafter the same).

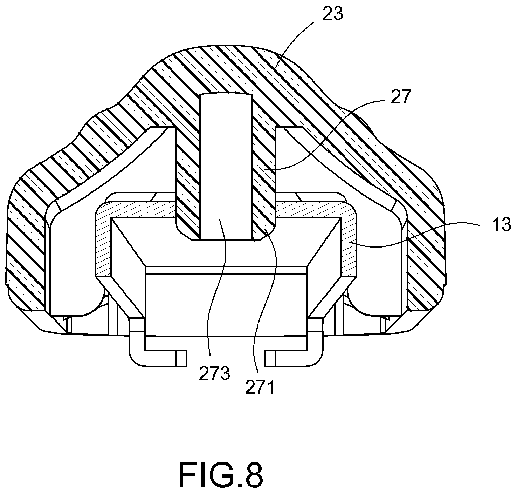

It is noted that, as shown in FIGS 6 and 8, for a tight insertion, each inserting bar 27 is a hollow inserting bar, so that the inserting bar 27 has a hollow portion 273. The inserting bars 27 are respectively extended from inner walls of the auxiliary covers 22 and the sub-covers 23, each inserting bar 27 has a free end portion 271 at an end along a protruding direction thereof. The hollow portion 273 is formed with an opening at the free end portion 271. As a result, the inserting bar 27 can be, elastically, radially compressed at the hollow portion 273 so as to make the inserting bars 27 able to be tightly inserted into the inserting holes 17, 17a respectively.

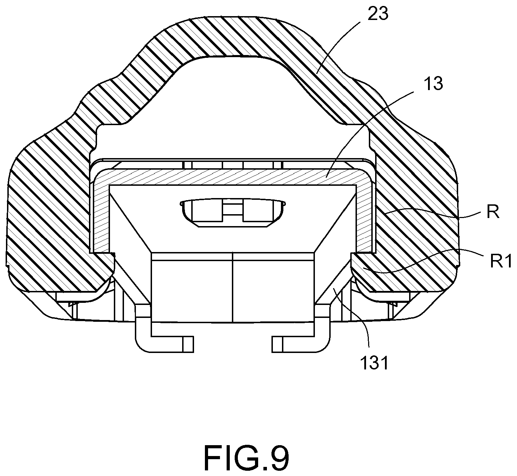

In an embodiment, as shown in FIGS. 4 and 9, on an inner wall of each of the main cover 21, the auxiliary covers 22 and the sub-covers 23 is disposed with at least one pair of ribs R. Each rib R has a buckling protrusion R1. The pair of ribs R of the main cover 21 uses its buckling protrusions R1 to buckle the bottom of the main frame 11, The pair of ribs R of the auxiliary cover 22 uses its buckling protrusions R1 to buckle the bottom of the auxiliary frame 12. The pair of ribs R of the sub-cover 23 uses its buckling protrusions R1 to buckle the bottom 131 of the sub-frame 13 (as shown in FIG. 9). Accordingly, each decorative cover can be more firmly fixed to each frame.

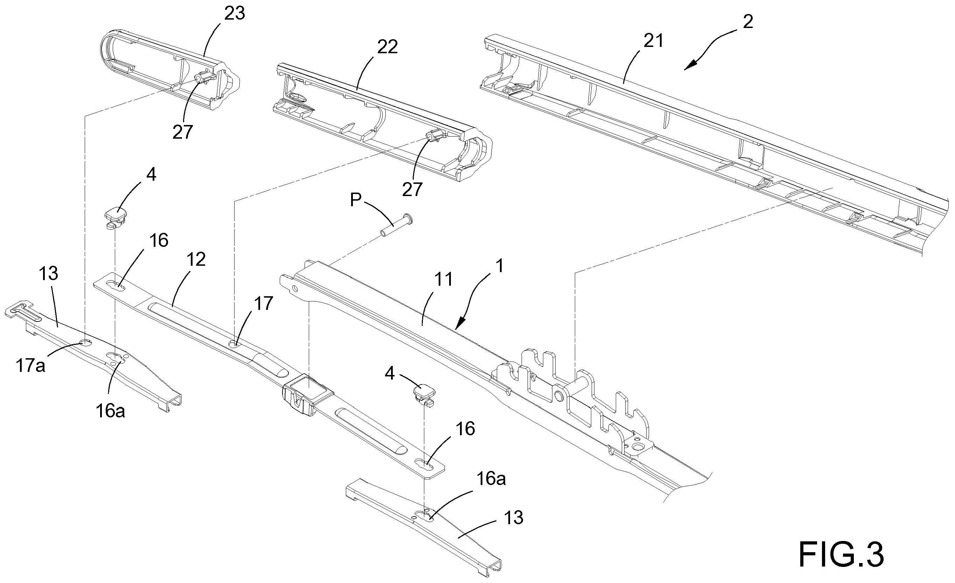

Moreover, as shown in FIGS. 3-4, a pair of bumps 18 protruded from the bottom side of each sub-frame 13 may be further provided and located at two opposite sides of the elongated hole 16a. Thereby, after a user has inserted and rotated the connecting member 4 an angle as aforementioned operation, a long edge of a bottom (not labeled) of the connecting member 4, which is exposed from a bottom side of the sub-frame 13, will be blocked by the pair of bumps 18 to make the connecting member 4 not easy to rotate under the condition of being blocked.

Thus, because the decorative cover structure 2 is separated into multiple segments (including the main cover 21, at least two auxiliary covers 22 and at least two sub-covers 23) without any connection therebetween, when the squeegee 3 connected among the sub-frames 13 moves in various directions along a curved surface on the vehicle glass and, it will not be obstructed and restricted by the decorative cover structure. Thus, the squeegee 3 can associate with each sub-frames 13 to perform various vibrations smoothly so as to let the squeegee 3 smoothly follow the curved surface of vehicle glass to be elastically deformed. In other words, the wiper blade of the disclosure can be used to ensure that the squeegee 3 is attached on vehicle glass to wipe to and fro and water droplets on the vehicle glass can be cleanly wiped away.

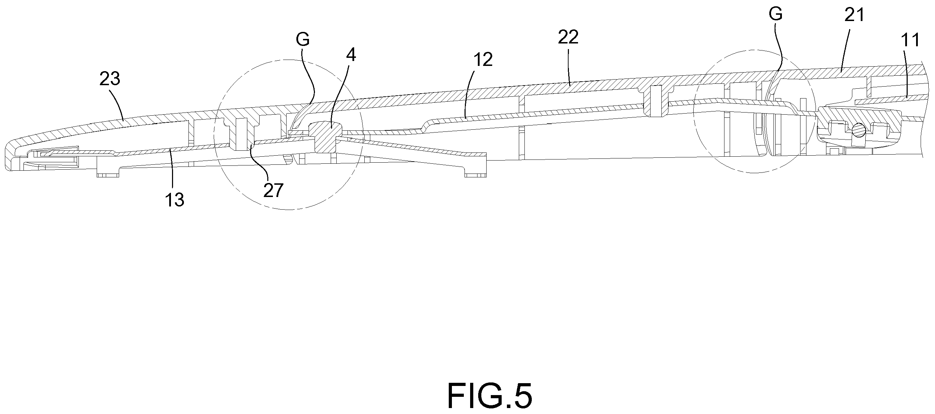

In addition, as shown in FIGS. 5-7, a gap G is formed between the main cover 21 and each auxiliary cover 22 and between each auxiliary cover 22 and each sub-cover 23. When the wiper blade of the disclosure is wiping on vehicle glass reciprocatingly, no contact exists between the main cover 21 and each auxiliary cover 22 and between each auxiliary cover 22 and each sub-cover 23 due to the gap G, so that no collision noise (such as collision noise caused by the contact between the main cover 21 and each auxiliary cover 22) will be generated. In addition, because of a small width of each gap G, snow cannot enter the gap G.

As shown in FIG. 11, which is the second embodiment of the wiper blade of the disclosure, the second embodiment is roughly the same as the aforementioned first embodiment, and the difference is the structural change of each inserting bar 27.

In the second embodiment, each inserting bar 27 may further have a flange 2711 protruded from a periphery of the free end portion 271 thereof. After insertion is completed, the flange 2711 of each inserting bar 27 corresponds to each inserting hole 17, 17a to respectively reversely fasten the bottom side of the auxiliary frame 12 and the bottom side of the sub-frame 13 so as to enhance the fixing effect of each inserting bar 27.

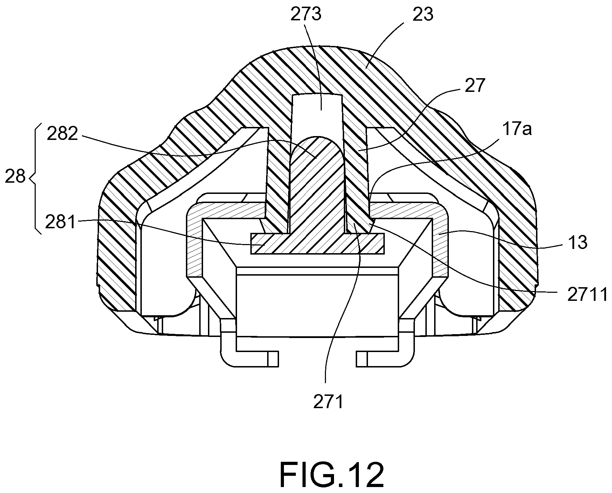

As shown in FIG. 12, which is the third embodiment of the wiper blade of the disclosure, the third embodiment is roughly the same as the aforementioned second embodiment, and the difference is the structural change of each inserting bar 27.

In the third embodiment, the inserting bar 27 of each auxiliary cover 22 and each sub-cover 23 is further disposed with a rod plug 28. The rod plug 28 includes a cap portion 281 and a plug portion 282. The plug portion 282 is upright connected to the cap portion 281. Each plug portion 282 is correspondingly inserted and plugged into the hollow portion 273 of each inserting bar 27, and the diameter of each inserting bar 27 will be enlarged after the insertion so as to further improve the tightness between the inserting bar 27 and the inserting holes 17, 17a respectively. Each cap portion 281 covers the free end portion 271 of each inserting bar 27 and makes the buckling protrusion R1 able to be clamped between the cap portion 281 and the bottom side of the auxiliary frame 12 and clamped between the cap portion 281 and the bottom side of the sub-frame 13. Thereby, the fixing effect of each inserting bar 27 can be further enhanced.

In sum, the wiper blade with a multi-segment decorative cover structure of the disclosure may achieve the expected object and effect and solve drawbacks of related art.

## Claims

1. A wiper blade comprising:
a frame structure (1), comprising a main frame, at least two auxiliary frames (12) and multiple sub-frames (13), a middle of each auxiliary frame (12) being respectively rotatably connected two ends of the main frame, each sub-frame (13) comprising a middle, each of the two ends of each auxiliary frame (12) being loosely connected with one of the sub-frame (13) via the middle;
a squeegee (3), connected to each sub-frame (13); and
a decorative cover structure (2), comprising a main cover (21), at least two auxiliary covers (22) and at least two sub-covers (23), the main cover (21) covering the main frame, each auxiliary cover (22) covering each auxiliary frame (12), each sub-cover covering part of each sub-frame (13);
**characterized in that** each sub-frame (13) and each auxiliary frame (12) is formed with an inserting hole (17, 17a), and each auxiliary cover (22) comprises an inserting bar (27) protruded therefrom and correspondingly inserted into the inserting hole (17) of each auxiliary frame (12), and each sub-cover (23) comprises an inserting bar (27) protruded therefrom and correspondingly inserted into the inserting hole (17a) of each sub-frame (13);
wherein the inserting bar (27) of each auxiliary cover (22) and the inserting bar (27) of each sub-cover (23) are respectively a hollow inserting bar, each inserting bar (27) comprises a hollow portion (273) and a free end portion (271), the free end portion (271) is disposed on an end along a protruding direction of each inserting bar (27), and the hollow portion (273) is formed with an opening at the free end portion (271).

2. The wiper blade of claim 1, wherein each inserting bar (27) is tightly inserted into each inserting hole (17, 17a).

3. The wiper blade of claim 1, wherein a periphery of the free end portion (271) is protruded with a flange (2711), and the flange (2711) of each inserting bar (27) reversely fasten the auxiliary frame (12) and the sub-frame (13) at the inserting hole (17a) corresponding thereto.

4. The wiper blade of claim 3, wherein each inserting bar (27) is further disposed with a rod plug (28), and each rod plug (28) is correspondingly inserted into the hollow portion (273) of each inserting bar (27).

5. The wiper blade of claim 4, wherein each rod plug (28) comprises a plug portion (282), and the plug portion (282) is correspondingly inserted and plugged into the hollow portion (273).

6. The wiper blade of claim 5, wherein each rod plug (28) further comprises a cap portion (281), the plug portion (282) is connected to the cap portion (281), and the cap portion (281) covers the free end portion (271) of the inserting bar (27).

7. The wiper blade of claim 1, wherein each of the main cover (21), the auxiliary covers (22) and the sub-covers (23) is disposed with at least one pair of ribs (R) comprising a buckling protrusion, the pair of ribs (R) of the main cover (21) is buckled with the main frame respectively by the buckling protrusions (R1) thereon, the pair of ribs (R) of the auxiliary cover (22) is buckled with the auxiliary frame (12) respectively by the buckling protrusions (R1) thereon, and the pair of ribs (R) of the sub-cover is buckled with the sub-frame (13) respectively by the buckling protrusions (R1) thereon.

8. The wiper blade of claim 1, further comprising a plurality of connecting members (4), wherein each of two ends of each auxiliary frame (12) is formed with an elongated hole (16), the middle of each sub-frame (13) is also formed with an elongated hole (16a), the connecting member (4) is inserted into the elongated hole (16) of the auxiliary frame (12) and the elongated hole (16a) of the sub-frame (13), and the connecting member (4) is loosely clamped between the auxiliary frame (12) and the sub-frame (13).

9. The wiper blade of claim 8, wherein each sub-frame (13) is further protruded with a pair of bumps (18) located on two opposite sides of the elongated hole (16a) of the sub-frame (13), and the connecting member (4) is blocked to rotate by the pair of bumps (18).

10. The wiper blade of claim 1, wherein a gap (G) is formed between the main cover (21) and each auxiliary cover (22) and between each auxiliary cover (22) and each sub-cover.

## Patentansprüche

1. Wischblatt, umfassend:
einer Rahmenstruktur (1), bestehend aus einem Hauptrahmen, mindestens zwei Hilfsrahmen (12) und mehreren Unterrahmen (13), wobei die Mitte jedes Hilfsrahmens (12) jeweils drehbar mit zwei Enden des Hauptrahmens verbunden ist, wobei jeder Unterrahmen (13) eine Mitte aufweist und jedes der beiden Enden jedes Hilfsrahmens (12) über die Mitte lose mit einem der Unterrahmen (13) verbunden ist;
eine Wischlippe (3), die mit jedem Unterrahmen (13) verbunden ist; und
eine Dekorabdeckstruktur (2), die eine Hauptabdeckung (21), mindestens zwei Hilfsabdeckungen (22) und mindestens zwei Unterabdeckungen (23) umfasst, wobei die Hauptabdeckung (21) den Hauptrahmen abdeckt, jede Hilfsabdeckung (22) jeden Hilfsrahmen (12) abdeckt und jede Unterabdeckung einen Teil jedes Unterrahmens (13) abdeckt;
**dadurch gekennzeichnet, dass** jeder Unterrahmen (13) und jeder Hilfsrahmen (12) mit einem Einführloch (17, 17a) versehen ist und jede Hilfsabdeckung (22) einen von ihr vorstehenden Einführstab (27) umfasst, der entsprechend in das Einführloch (17) jedes Hilfsrahmens (12) eingeführt ist, und jede Unterabdeckung (23) einen Einführstab (27) aufweist, der aus ihr herausragt und entsprechend in das Einführloch (17a) jedes Unterrahmens (13) eingeführt ist;
wobei der Einführstab (27) jeder Hilfsabdeckung (22) und der Einführstab (27) jeder Unterabdeckung (23) jeweils ein hohler Einführstab sind, wobei jeder Einführstab (27) einen Hohlabschnitt (273) und ein freies Endstück (271) aufweist, wobei das freie Endstück (271) an einem Ende entlang einer Auskragungsrichtung jedes Einführstabs (27) angeordnet ist und der Hohlabschnitt (273) am freien Endstück (271) mit einer Öffnung versehen ist.

2. Wischblatt nach Anspruch 1, wobei jeder Einführstab (27) fest in jedes Einführloch (17, 17a) eingesteckt ist.

3. Wischblatt nach Anspruch 1, wobei ein Umfang des freien Endstücks (271) mit einem Flansch (2711) vorsteht und der Flansch (2711) jedes Einführstabs (27) den Hilfsrahmen (12) und den Unterrahmen (13) an dem ihm entsprechenden Einführloch (17a) umgekehrt ver .

4. Wischblatt nach Anspruch 3, wobei jeder Einführstab (27) ferner mit einem Stabstopfen (28) versehen ist und jeder Stabstopfen (28) entsprechend in den Hohlabschnitt (273) jedes Einführstabs (27) eingeführt ist.

5. Wischblatt nach Anspruch 4, wobei jeder Stabstopfen (28) einen Stopfenabschnitt (282) umfasst und der Stopfenabschnitt (282) entsprechend in den Hohlabschnitt (273) eingeführt und dort eingesteckt ist.

6. Wischblatt nach Anspruch 5, wobei jeder Stabstopfen (28) ferner einen Kappenabschnitt (281) umfasst, der Stopfenabschnitt (282) mit dem Kappenabschnitt (281) verbunden ist und der Kappenabschnitt (281) das freie Endstück (271) des Einführstabs (27) abdeckt.

7. Wischblatt nach Anspruch 1, wobei die Hauptabdeckung (21), die Hilfsabdeckungen (22) und die Unterabdeckungen (23) jeweils mit mindestens einem Rippenpaar (R) versehen sind, das einen Verriegelungsvorsprung umfasst, wobei das Rippenpaar (R) der Hauptabdeckung (21) jeweils durch die daran befindlichen Verriegelungsvorsprünge (R1) daran mit dem Hauptrahmen verknappt ist, das Rippenpaar (R) der Hilfsabdeckung (22) jeweils durch die daran befindlichen Verriegelungsvorsprünge (R1) mit dem Hilfsrahmen (12) verknappt ist und das Rippenpaar (R) der Unterabdeckung jeweils durch die daran befindlichen Verriegelungsvorsprünge (R1) mit dem Unterrahmen (13) verknappt ist.

8. Wischblatt nach Anspruch 1, das ferner eine Vielzahl von Verbindungselementen (4) umfasst, wobei an jedem der beiden Enden jedes Hilfsrahmens (12) ein Langloch (16) ausgebildet ist, in der Mitte jedes Unterrahmens (13) ebenfalls ein Langloch (16a) ausgebildet ist, das Verbindungselement (4) in das Langloch (16) des Hilfsrahmens (12) und das Langloch (16a) des Unterrahmens (13) eingeführt ist und das Verbindungselement (4) lose zwischen dem Hilfsrahmen (12) und dem Unterrahmen (13) eingeklemmt ist.

9. Wischblatt nach Anspruch 8, wobei jeder Unterrahmen (13) ferner mit einem Paar Vorsprüngen (18) versehen ist, die sich an zwei gegenüberliegenden Seiten des Langlochs (16a) des Unterrahmens (13) befinden, und das Verbindungselement (4) durch das Paar Vorsprünge (18) gegen eine Drehung gesichert ist.

10. Wischblatt nach Anspruch 1, wobei zwischen der Hauptabdeckung (21) und jeder Hilfsabdeckung (22) sowie zwischen jeder Hilfsabdeckung (22) und jeder Unterabdeckung ein Spalt (G) gebildet ist.

## Revendications

1. Un balai d'essuie-glace comprenant :
une structure de châssis (1), comprenant un châssis principal, au moins deux châssis auxiliaires (12) et plusieurs sous-châssis (13), la partie centrale de chaque châssis auxiliaire (12) étant respectivement reliée de manière rotative aux deux extrémités du châssis principal, chaque sous-châssis (13) comprenant une partie centrale, chacune des deux extrémités de chaque châssis auxiliaire (12) étant reliée de manière lâche à l'un des sous-châssis (13) via ladite partie centrale ;
une lame d'essuyage (3), reliée à chaque sous-châssis (13) ; et
une structure de couvercle décoratif (2), comprenant un couvercle principal (21), au moins deux couvercles auxiliaires (22) et au moins deux sous-couvercles (23), le couvercle principal (21) recouvrant le châssis principal, chaque couvercle auxiliaire (22) recouvrant chaque châssis auxiliaire (12), chaque sous-couvercle recouvrant une partie de chaque sous-châssis (13) ;
**caractérisé en ce que** chaque sous-châssis (13) et chaque châssis auxiliaire (12) est muni d'un trou d'insertion (17, 17a), et chaque couvercle auxiliaire (22) comprend une barre d'insertion (27) faisant saillie de celui-ci et insérée de manière correspondante dans le trou d'insertion (17) de chaque châssis auxiliaire (12), et chaque sous-couvercle (23) comporte une barre d'insertion (27) qui en fait saillie et qui est insérée de manière correspondante dans le trou d'insertion (17a) de chaque sous-châssis (13) ;
dans lequel la barre d'insertion (27) de chaque couvercle auxiliaire (22) et la barre d'insertion (27) de chaque sous-couvercle (23) sont respectivement des barres d'insertion creuses, chaque barre d'insertion (27) comprenant une partie creuse (273) et une partie d'extrémité libre (271), la partie d'extrémité libre (271) est disposée à une extrémité dans la direction de saillie de chaque barre d'insertion (27), et la partie creuse (273) est pourvue d'une ouverture au niveau de la partie d'extrémité libre (271).

2. Le balai d'essuie-glace selon la revendication 1, dans lequel chaque barre d'insertion (27) est insérée de manière serrée dans chaque trou d'insertion (17, 17a).

3. Le balai d'essuie-glace selon la revendication 1, dans lequel la périphérie de la partie d'extrémité libre (271) est pourvue d'une bride (2711), et la bride (2711) de chaque barre d'insertion (27) assure une fixation inversé le châssis auxiliaire (12) et le sous-châssis (13) au niveau du trou d'insertion (17a) qui lui correspond.

4. Le balai d'essuie-glace selon la revendication 3, dans lequel chaque barre d'insertion (27) est en outre munie d'un bouchon de tige (28), et chaque bouchon de tige (28) est inséré de manière correspondante dans la partie creuse (273) de chaque barre d'insertion (27).

5. Le balai d'essuie-glace selon la revendication 4, dans lequel chaque bouchon de tige (28) comprend une partie de bouchon (282), et la partie de bouchon (282) est insérée et enfoncée de manière correspondante dans la partie creuse (273).

6. Le balai d'essuie-glace selon la revendication 5, dans lequel chaque bouchon de tige (28) comprend en outre une partie de capuchon (281), la partie de bouchon (282) est reliée à la partie de capuchon (281), et la partie de capuchon (281) recouvre la partie d'extrémité libre (271) de la barre d'insertion (27).

7. Le balai d'essuie-glace selon la revendication 1, dans lequel le couvercle principal (21), les couvercles auxiliaires (22) et les sous-couvercles (23) comportent chacun au moins une paire de nervures (R) comprenant une protubérance de verrouillage, la paire de nervures (R) du couvercle principal (21) étant serrée contre le châssis principal respectivement par les protubérances de verrouillage (R1) qui y sont formées, la paire de nervures (R) du couvercle auxiliaire (22) est fixée au châssis auxiliaire (12) respectivement par les protubérances de verrouillage (R1) qui y sont formées, et la paire de nervures (R) du sous-couvercle est fixée au sous-châssis (13) respectivement par les protubérances de verrouillage (R1) qui y sont formées.

8. Le balai d'essuie-glace selon la revendication 1, comprenant en outre une pluralité d' éléments de liaison (4), dans lequel chacune des deux extrémités de chaque châssis auxiliaire (12) est pourvue d'un trou oblong (16), le milieu de chaque sous-châssis (13) est également pourvu d'un trou oblong (16a), l'élément de liaison (4) est inséré dans le trou oblong (16) du châssis auxiliaire (12) et dans le trou oblong (16a) du sous-châssis (13), et l'élément de liaison (4) est serré sans être bloqué entre le châssis auxiliaire (12) et le sous-châssis (13).

9. Le balai d'essuie-glace selon la revendication 8, dans lequel chaque sous-châssis (13) comporte en outre une paire de bosses (18) situées sur les deux côtés opposés du trou oblong (16a) du sous-châssis (13), et l'élément de liaison (4) est empêché de tourner par ladite paire de bosses (18).

10. Le balai d'essuie-glace selon la revendication 1, dans lequel un intervalle (G) est formé entre le couvercle principal (21) , et chaque couvercle auxiliaire (22), ainsi qu'entre chaque couvercle auxiliaire (22) et chaque sous-couvercle.
